# EUROPEAN PATENT APPLICATION

(11) **EP 1 293 963 A1**
(43) Date of publication of application: **19.03.2003**
(21) Application number: 01121477.2
(22) Date of filing: 07.09.2001
(51) Int. Cl.: G10L 15/26

(54) **Dialogue management server architecture for dialogue systems**

(71) Applicant: Sony International (Europe) GmbH, 10785 Berlin (DE)
(72) Inventor: Di Profio, Ugo, Sony International (Europe) GmbH, 70327 Stuttgart (DE)
(74) Representative: Müller - Hoffmann & Partner

(57) **Abstract**

A dialogue management server (3) comprises a core dialogue management unit (2) to provide basic dialogue features of a dialogue system, and a dialogue engine unit (5) to coordinate a communication between a user (1) on the one hand, and the core dialogue management unit (2) and at least one extension module (9) which is connected to the dialogue management server (3) and which provides additional communication and/or dialogue and/or language features of a dialogue system on the other hand.

## Description

The present invention relates to a dialogue management server for dialogue systems, an extension module connectable to a dialogue management server and a computer program product embodying the dialogue management server and/or the extension module.

Dialogue systems are usually task-oriented and implement a dialogue management that is specific for the task. Such a dialogue management is typically modelled as a finite state machine wherein inputs of a user or actions of the system trigger transitions from state to state. Each state defines a specific status or context for the system. The dialogue management is implemented locally in the given state and is limited to the functionality predefined for the context which the state models. During the dialogue new information is collected from the system and eventually a terminal state will be reached where the system can finally provide the requested service. If the terminal state cannot be reached the request will be rejected from the system. Thereafter, the system returns to a new initial state from which a new dialogue can start. Typically, in the intermediate states the dialogue management strategy is to drive the dialogue to the terminal state.

Therefore, the overall dialogue management is distributed over several very specialized local dialogue managers, each of which is able to perform limited control only.

Furthermore, known dialogue systems provide a rigid language processing only.

It is the object underlying the present invention to enhance existing dialogue systems.

This object is solved by a dialogue management server according to independent claim 1 or 3. Preferred embodiments thereof are defined in dependent claims 2 and 4. Further, the object is solved by an extension module connectable to such a dialogue management server as defined in claim 5 or 7. Preferred embodiments thereof are respectively defined in dependent claims 6 and 8 to 11. Furthermore, computer program products embodying the present invention and their preferred embodiments are respectively defined in claims 12 to 16.

According to the present invention a dialogue management server comprises a core dialogue management unit to provide basic dialogue features of a dialogue system, and a dialogue engine unit to coordinate a communication between a user on the one hand, and the core dialogue management unit and - e.g. if connected - at least one extension module which is connected to the dialogue management server and which provides additional communication and/or dialogue and/or language features of a dialogue system on the other hand.

According to a preferred embodiment of the dialogue management server according to the present invention, the dialogue management server further comprises a core language processing unit to provide a language processor and basic language features of a dialogue system, wherein the dialogue engine unit also coordinates a communication from/to the core language processing unit.

Furthermore, according to the present invention it is also possible that a dialogue management server comprises a core language processing unit to provide a language processor and basic language features of a dialogue system, and a dialogue engine unit to coordinate a communication between a user on the one hand, and the core language processing unit and - e.g. if connected - at least one extension module which is connected to the dialogue management server and which provides additional communication and/or dialogue and/or language features of a dialogue system on the other hand.

In any case the dialogue management server according to the present invention might further comprise a plug and play service unit to define connection and disconnection services for at least one extension module and to coordinate at least one communication link setup to/from each connected extension module, wherein the additional communication and/or dialogue and/or language features of an extension module get directly connected to a corresponding unit of the dialogue management server via said at least one communication link.

An extension module according to the present invention which is connectable to a dialogue management server according to the present invention comprises a dialogue management sub-module to provide additional communication and/ or dialogue features to the dialogue engine unit and/or a language processing extension module to provide additional language features to the dialogue engine unit, preferably directly to a core language processing unit included in the dialogue management server.

According to a preferred embodiment of an extension module according to the present invention said dialogue management sub module and/or said language processing extension module respectively provide a registration functionality to define connection and disconnection services for said extension module and to coordinate a communication link setup in respect to said additional communication and/or dialogue and/or language features to/from said extension module. The registration functionality might also be combined in one of the dialogue management sub module and the language processing extension module or be provided individually or combined in the extension module as such.

Therefore, according to the present invention a solution for the implementation of a general-purpose architecture for a dialogue management is shown. According to the present invention typical functionality of task-oriented dialogue systems which implement a dialogue management that is specific for the task, but which can be shared for several tasks regardless of the specific task for which the dialogue system and the dialogue management are implemented, i. e. basic dialogue features of a dialogue system, are implemented in a core dialogue management unit and preferably in a core language processing unit, and a dialogue engine unit coordinates a communication between a user and the core unit(s) of the dialogue management server as well as - e.g. if connected - at least one extension module which is connected to the dialogue management server and which provides dialogue features additional to the core features to adapt the dialogue system, i. e. the dialogue management server according to the present invention, to one or more specific tasks. The extension modules can be provided and connected to the dialogue management server in any number. The component of the dialogue management server taking care of the connections, e.g. the plug and play service unit, is only provided once. This adaptation of the dialogue system can be seen as a routing of requests to the connected extension modules when these requests can not be handled directly by the core units.

Examples of typical functionality which can be shared is that a dialogue system has to ask a question to the user in order to collect a certain information or the dialogue system has to maintain a proper status when the input of a specific information is spread across several dialogues. Also, different requests may be mixed during the dialogue and the dialogue management needs to handle them properly.

In general, the core dialogue management unit is determined as a basic set of services and functionality which is required in almost all dialogue systems. According to the prior art such a core dialogue management has to be implemented each time a new dialogue system is developed. In contrast thereto, according to the present invention, the core dialogue management needs not to be newly implemented, but only dialogue management needed for a specific task. This implementation is performed via an extension module.

As mentioned above, independently or additionally also the language processing is split into a core language processing unit which provides a language processor and basic language features of a dialogue system and a task-dependent language processing extension which is realized with an extension module. Therefore, also in respect to the language processing the same advantages are realized by the same concept of dynamic reconfiguration and extension as in case of the dialogue management. In combination overall dynamic reconfiguration and extension is supported.

Therefore, with the dialogue management architecture according to the present invention the following advantages are achieved:
- The functionality has not to be known in advance.
- The dialogue management is able to cope properly with unknown situations, since requests to the system are routed through all connected extension modules in case they can not be handled by the core units.
- The system can be quickly expanded.
- The system has no overhead in view of currently executed tasks, i. e. functionality can be incorporated when it is needed and has not to be incorporated in advance.
- The basic functionality has not to be newly implemented every time a dialogue system is developed.
- Team development can be properly supported.
- Automatic configuration of the dialogue management is supported, since the routing of requests through the connected extension modules provides a kind of self description functionality

Further features and advantages of the dialogue management architecture according to the present invention will become apparent from the following description of an exemplary embodiment taken in conjunction with the accompanying figures in which
- **Fig. 1**: which shows a block diagram of a dialogue management server and a connected extension module according to the present invention,
- **Fig. 2**: shows a simplified example of the connection between the dialogue management server and dialogue management extension modules according to the present invention with the exemplary routing of a request, and
- **Fig. 3**: shows a blockdiagram of a simplified general dialogue system.

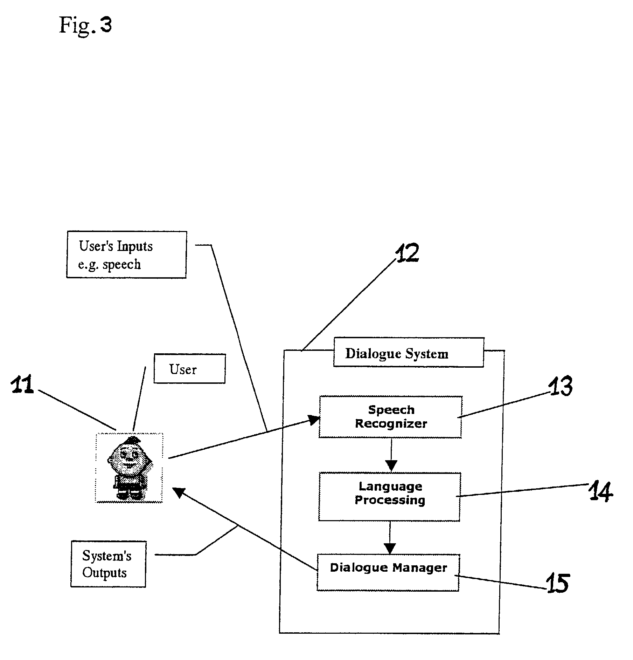

The typical dialogue system 12 shown in Fig. 3 comprises a speech recognizer 13 which receives user inputs of a user 11, here speech inputs, and supplies its results to a language processing unit 14. The language processing unit 14 interprets the recognized user inputs and provides its results to a dialogue manager 15 which provides system outputs to the user 11.

The shown dialogue system is based on a speech input, but - of course - not limited thereto. As in case of the dialogue system according to the present invention, alternatively or additionally a textual input or any other input possibility might be used. In such a case a corresponding "user input" recognizer has to be implemented instead of or additionally to the speech recognizer 13. Further, the system output could be supplied to the user in any desired form, e.g. textual, as speech output, tactile, etc..

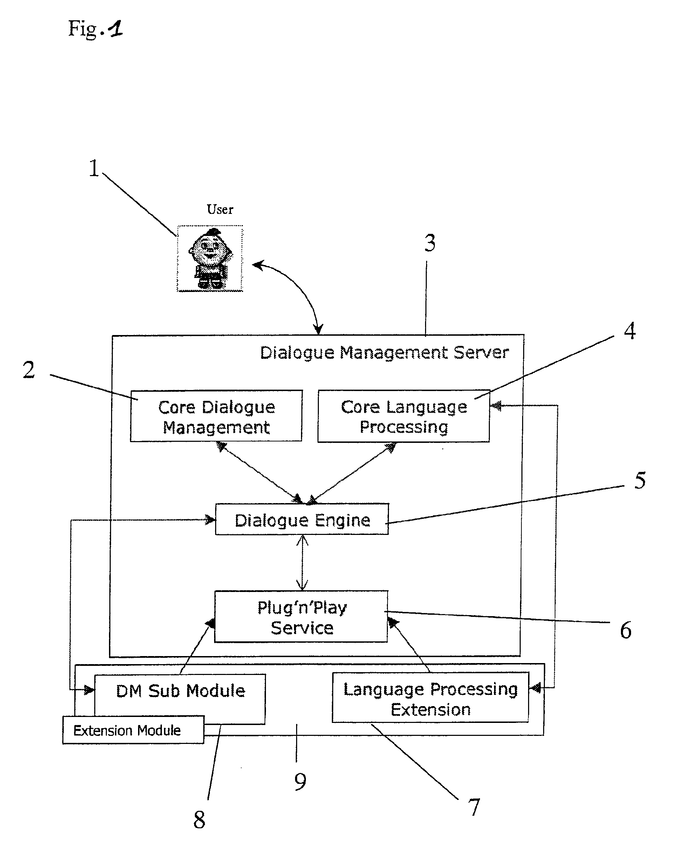

In line with the general purpose dialogue management server architecture according to the present invention shown in Fig. 1 a core dialogue management unit 2 and a core language processing unit 4 are implemented in a dialogue management server 3. These two core units 2, 4 implement the basic services and functionality a dialogue manager has to provide, i. e. of the shown dialogue management server 3. A dialogue engine 5 within the dialogue management server 3 coordinates these two core units 2, 4.

The dialogue management server 3 further incorporates a plug and play service unit 6 responsible for the dynamic connection of extension modules 9, one of which is shown in Fig. 1. The plug and play service unit 6 defines a proper interface between the dialogue management server 3 and the extension module(s) 9.

As described above, an extension module 9 provides additional functionality to the dialogue system in terms of a new dialogue management sub-module 8 and/or a new language processing extension module 7, which e. g. provides extensions to a parser which is implemented in the core language processing unit 4. Once an extension module 9 is connected, it is registered into the system and it immediately becomes available to the dialogue management server 3. Also, the services and functionalities of the extension module 9 are directly accessible by the dialogue management server 3, e. g. the communications between the dialogue management server 3 and the dialogue management sub-module 8 are set-up directly from the dialogue engine 5 to the dialogue management sub-module 8 and not routed through the plug and play service unit 6. A dialogue management sub-module 8 will be integrated into the overall dialogue management via the dialogue engine unit 5 and a language processing extension module 7 will be integrated into the language processing, e. g. the parser of the core language processing unit 4 will be extended. Therefore, the language processing extension module 7 directly communicates with the core language processing unit 4. Therefore, the plug and play service unit 6 is connected to the dialogue engine 5 to set-up the needed direct connection(s) between the dialogue management sub-module 8 and the dialogue engine 5 and/or the language processing extension module 7 and the core language processing unit 4.

An extension module 9 can be connected to the dialogue management server 3 at any time, e. g. at run-time. On one hand, an extension modules 9 enriches the functionality of a dialogue system with the specific services and functionalities it provides. On the other hand, all connected extension modules 9 can make use of the basic services and functionalities provided by the core units 2, 4 of the dialogue management server 3. As a simple example, whenever a dialogue management sub-module 8 needs to ask a yes/no-question to a user 1, it can use a basic service called e. g. ask yes/no-question and simply provide the proper parameters to it, e. g. the question to ask and what to do for the yes-answers and for the no-answers.

Further, an extension module 9 might exploit services from another extension module 9 with the intermediation of the dialogue management server 3, i.e. the dialogue engine unit 5.

The dialogue management server 3 does not need to know in advance all the available services and resources, e. g. functionalities in the system. The only requirement is a proper interface between the dialogue management server 3 and the extension modules 9. When the dialogue management server 3 receives a user's input, e. g. a request to provide a service, it is routed to the registered extension modules 9 to check whether there are any modules which can handle the request. Eventually the request will be executed by a dialogue management sub-module 8 or by the core units 2, 4 of the dialogue management server 3. If the request cannot be handled it will be rejected.

Extension modules 9 can be disconnected from the system at any time and the system is reconfigured accordingly and immediately, i. e. the services and functionalities provided by the disconnected extension modules 9 will not be available anymore, but the system will continue to work properly. User's inputs corresponding only to requests to the removed extension modules 9 will simply be rejected.

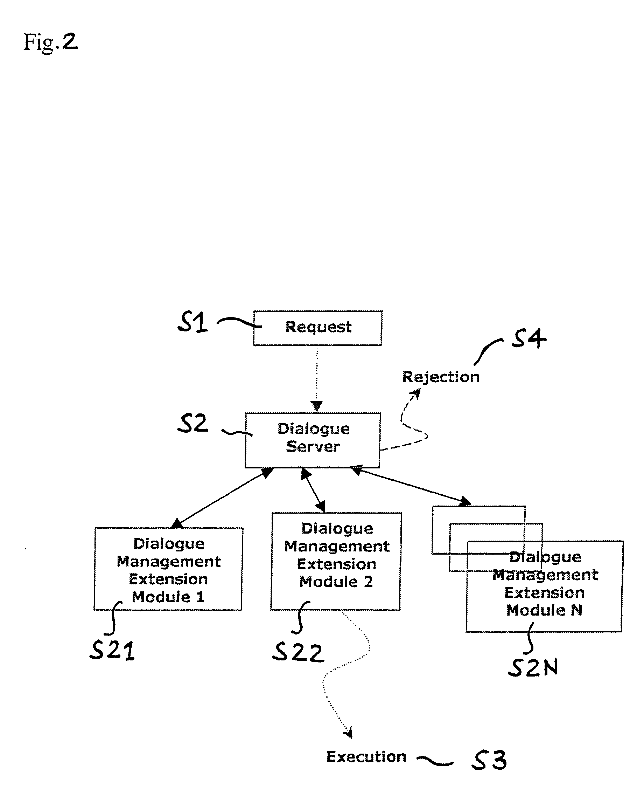

A simplified example of the connection between the dialogue management server 3 and dialogue management extension modules 9 according to the present invention with the exemplary routing of a request is shown in Fig. 2.

A request which is posted in a step S1 is provided to the dialogue management server 3 which handles said request in a step S2. Therefore, when the core units 2, 4 of the dialogue management server 3 can not provide an appropriate processing, the request gets transferred to a first connected extension module 9 which processes said request in a step S21, to a second connected extension module 9 which processes said request in a step S22, ..., and to a N^{th} connected extension module 9 which processes said request in a step S2N. In case e.g. the second connected extension module 9 can handle the request, an execution is performed in step S3. In case no connected extension module 9 can handle the request, a rejection is performed in step S4.

In the following each of the units and modules of the dialogue management server 3 and the extension module 9 shown in Fig. 1 will be explained in detail.

The core dialogue management unit 2 implements the basic features a dialogue system needs, e. g. services and functionalities to implement a multimodal parametric information exchange. For example, features of the core dialogue management unit 2 are to ask questions, to bias the understanding process according to the question and/or the context, to provide generic assistance to the user, to handle dialogue history, to handle mixed requests from the user, to handle unsupported user's inputs, e. g. rejections, etc. The generic assistance to the user could e. g. be report of the status of the system, an explanation of current expectations from the system, a report on critical/unsupported conditions in the dialogue, etc.

The core language processing unit 4 implements a language processor. For example, a natural language parser is implemented which is able to produce an internal, e. g. conceptual, description of user's inputs. The core language processing unit 4 can be programmed using grammar files. A basic general-purpose grammar file is provided which can support the understanding of the user's inputs to be interpreted as requests for the basic services provided by the core dialogue management unit 2. As an example, given the user's input "What should I do now?", the core language processing unit might produce the internal description (CONCEPT Info_query) (TOKEN what) (TYPE do).

The dialogue engine unit 5 receives all user's inputs and coordinates these and other inputs, e. g. from the connected extension module(s) 9, either directly or as a mediator. The dialogue engine unit 5 has knowledge about all the units and modules connected to the system and can interface with them. For example, when the core dialogue management unit 2 needs to bias the understanding process, the dialogue engine unit 5 will provide support to the core dialogue management unit 2 to control the core language processing unit 4.

The plug and play service unit 6 is responsible for the dynamic registration of the extension modules 9. The dialogue management server 3 defines special connection and disconnection services for the extension modules 9 through the plug and play service unit 6. When an extension module 9 has to be connected/disconnected to/from the dialogue management server 3 a registration/unregistration service gets invoked via the plug and play service unit 6. First, the extension module 9 contacts the plug and play service unit 6, e. g. sends a message to it or copies a file in a dedicated location in order to inform its interface, then the plug and play service unit 6 communicates with the dialogue engine unit 5 to actually register the extension module 9. The dialogue engine unit 5 is not affected by the registration/unregistration procedures which can be executed at any time, e. g. while the dialogue system is running. After the registration phase, the dialogue engine unit 5 and the core language processing unit 4 are able to interface with the extension module 9 directly through an Entry Point service and, vice versa, through a Service Point service.

An extension module 9 can be comprised of two components: A dialogue manager sub-module 8 and a language processing extension module 7. The two modules are not necessarily related. In fact, an extension module 9 can comprise only the dialogue management sub-module 8 or only the language processing extension module 7. The registration procedure of the two modules 8, 7 with the plug and play service unit 6 is independent. Typically, the language processing extension module 7 supports the core language processing unit 4 in order to process user's input that can be served by the new functionalities provided by the dialogue management sub-module 8. For example, a topic chatting extension module can be comprised of a language processing extension module 7 specialized to understand user's sentences about the specific topic and of a dialogue management sub-module 8 able to do some reasoning on the specific topic and to gather new information about it.

Usually, a special interface with extension modules 9 is defined: When an extension module 9 is connected through the plug and play service unit 6, the interface of the extension module 9 is registered to the dialogue engine unit 5 and the core language processing unit 4 in order to let these core units 5, 4 directly communicate with the extension module 9. For example, an interface is defined in terms of
- Name - identifies the extension module 9 uniquely,
- Setup - a service to be executed by the dialogue engine unit 5 when the extension module 9 is registered,
- Entry Point - a service to be used to interface with the extension module 9, i. e. requests to the extension module 9 have to be sent using this service,
- Exit Point - a service to be executed when the extension module is unregistered,
- Service Point - a service available to the extension module 9 in order to request services to the dialogue engine unit 5, e. g. for using functionality of the core dialogue management unit 2,
- Grammar Extension - a grammar file and operational instruction which can be used to specify how to use the grammar file, e. g. the grammar file can be substituted to the current one, or those grammar files can be used together,
- Language Extension - a language file.

In a preferred embodiment of the present invention the dialogue management server 3 and the extension modules 9 are implemented on a digital signal processor or the like. In this case, each of the units and modules described above could be designed and run as a separate process on the same computational device or on different ones. In case of a single processor system they may be run as threads. For example, the core dialogue management unit 2, the dialogue engine unit 5 and the plug and play service unit 6 could constitute a single multithreaded process.

Each of the units and modules described above running as a separate process could be implemented using different programming languages. Run-time communications between units is carried on using the communication services described above.

The exemplary embodiment described above refers to a spoken dialogue system, but the dialogue management server architecture according to the present invention can be extended to multimodal dialogue systems and dialogue management. In such a case, for example, the core language processing unit 4 would comprise processors for the other modalities. Of course, also written dialogue systems are equally supported.

As mentioned above, a general-purpose dialogue management architecture is proposed according to the present invention to implement core dialogue management. Core dialogue management is supposed to implement the basic services and functionality a dialogue manager has to provide. Also, the dialogue management server architecture implements a plug and play mechanism to dynamically connect extension modules that can provide additional functionality to the dialogue system. Further, extension modules can profit from services provided from the core dialogue management.

Extension modules can be connected at any time, e. g. at run-time, to the dialogue management server. Many of the disadvantages of the state of the art are addressed by the dialogue management architecture:
- Functionality doesn't has to be known in advance, since new extension modules can be connected at any time to the system,
- Automatic configuration of the dialogue management through self-description of extension modules.
- The dialogue engine unit is able to cope properly with unknown requests since the management of the requests is routed through the connected extension modules.
- The system can be quickly expanded simply by plugging in new extension modules.
- The system can be kept at a reasonable size, since extension modules can be connected when they are required and then removed when they are not required anymore.
- Implementation can be focused on specific functionality, since the dialogue management server architecture according to the present invention provides basic services.
- Team development is possible, since the interface between extension modules and the dialogue management server is known.

## Claims

1. Dialogue management server (3), **characterized by**
- a core dialogue management unit (2) to provide basic dialogue features of a dialogue system, and
- a dialogue engine unit (5) to coordinate a communication between a user (1) on the one hand, and the core dialogue management unit (2) and - if connected - at least one extension module (9) which is connected to the dialogue management server (3) and which provides additional communication and/or dialogue and/or language features of a dialogue system on the other hand.

2. Dialogue management server (3) according to claim 1, **characterized by**
- a core language processing unit (4) to provide a language processor and basic language features of a dialogue system, wherein
- the dialogue engine unit (5) also coordinates a communication from/to the core language processing unit (4).

3. Dialogue management server (3), **characterized by**
- a core language processing unit (4) to provide a language processor and basic language features of a dialogue system, and
- a dialogue engine unit (5) to coordinate a communication between a user (1) on the one hand, and the core language processing unit (4) and - if connected - at least one extension module (9) which is connected to the dialogue management server (3) and which provides additional communication and/or dialogue and/or language features of a dialogue system on the other hand.

4. Dialogue management server (3) according to anyone of the preceding claims, **characterized by**
- a plug and play service unit (6) to define connection and disconnection services for at least one extension module (9) and to coordinate at least one communication link setup to/from each connected extension module (9), wherein
- the additional communication and/or dialogue and/or language features of an extension module get directly connected to a corresponding unit of the dialogue management server (3) via said at least one communication link.

5. Extension module (9) connectable to a dialogue management server (3) according to anyone of claims 1 to 4, **characterized by**
- a dialogue management sub module (8) to provide additional communication and/or dialogue features to the dialogue engine unit (5).

6. Extension module (9) according to claim 5, **characterized in that**
- said dialogue management sub module (8) provides a registration functionality to define connection and disconnection services for said extension module (9) and to coordinate a communication link setup in respect to said additional communication and/or dialogue features to/from said extension module (9).

7. Extension module (9) connectable to a dialogue management server (3) according to anyone of claims 1 to 4, **characterized by**
- a language processing extension module (7) to provide additional language features to the core language processing unit (4).

8. Extension module (9) according to claim 7, **characterized by**
- a dialogue management sub module (8) to provide additional communication and/or dialogue features to the dialogue engine unit (5).

9. Extension module (9) according to claim 8, **characterized in that**
- said extension module (9) provides a registration functionality to define connection and disconnection services for said extension module (9), to coordinate a communication link setup in respect to said additional language features to/from said extension module (9), and to coordinate a communication link setup in respect to said additional communication and/or dialogue features to/from said extension module (9).

10. Extension module (9) according to claim 8 or 9, **characterized in that**
- said dialogue management sub module (8) provides a registration functionality to define connection and disconnection services for said extension module (9) and to coordinate a communication link setup in respect to said additional communication and/or dialogue features to/from said extension module (9).

11. Extension module (9) according to anyone of claims 7 to 10, **characterized in that**
- said language processing extension module (7) provides a registration functionality to define connection and disconnection services for said extension module (9) and to coordinate a communication link setup in respect to said additional language features to/from said extension module (9).

12. Computer program product, **characterized by** computer program means embodying the dialogue management server (3) according to anyone of claims 1 to 4.

13. Computer program product according to claim 12, **characterized in that** each unit (2, 4, 5, 6) is designed as separate process.

14. Computer program product, **characterized by** computer program means embodying the extension module (9) according to anyone of claims 5 and 6 and/or anyone of claims 7 to 11.

15. Computer program product according to claim 14, **characterized in that** each module (7, 8) is designed as separate process.

16. Computer program product according to anyone of claims 12 to 15, **characterized in that** said computer program means are stored on a computer readable storage medium.
